# EUROPEAN PATENT SPECIFICATION

(11) **EP 2 575 234 B1**
(45) Date of publication and mention of the grant of the patent: **06.09.2017**
(21) Application number: 11183623.5
(22) Date of filing: 30.09.2011
(51) Int. Cl.: H02J 7/00

(54) **Battery lifecycle management of a dual battery handset**
Batterielebensdauermanagement eines Doppelbatteriehandapparats
Gestion du cycle de vie de batterie d'un combiné de batterie double

(43) Date of publication of application: 03.04.2013
(73) Proprietor: BlackBerry Limited, Waterloo, ON N2K 0A7 (CA)
(72) Inventor: Plestid, Thomas Leonard Trevor, Kanata, Ontario K2K 3K1 (CA)
(74) Representative: Hanna Moore + Curley

(56) References cited:
- EP-A1- 2 051 154
- WO-A2-2006/051178
- US-A1- 2010 134 305
- US-A1- 2010 237 831
- US-A1- 2011 230 240
- US-B1- 6 262 560

## Description

### FIELD

The present disclosure relates to electronic devices having rechargeable batteries.

### BACKGROUND

Many portable electronic devices, such as portable computers (including tablet computers and laptop computers), mobile communication devices (such as cellular phones and smart phones), mobile communication device accessories, remote controls, electronic navigation devices (such as Global Positioning System devices) or portable DVD players, may be powered by batteries that may be regularly changed or recharged. Some of these portable electronic devices may be handheld, that is, sized and shaped to be held or carried in a human hand. Although a rechargeable battery contributes to a device's portability, some rechargeable batteries deteriorate over time. The deterioration of a rechargeable battery relates to the amount that one or more performance characteristics of the battery have degraded over time. The battery performance characteristics that are subject to deterioration include, for example, the charge capacity of the battery and the battery's equivalent series resistance (ESR). The charge capacity of the battery is a measure of the amount of energy that may be stored in the battery when fully charged. The ESR of the battery is relevant to determining the amount of electrical current that the battery is capable of delivering.

The deterioration of a rechargeable battery may be monitored to determine when the battery has reached end of useful life and should be replaced. This information may be used to inform the user that the minimum storage capacity is no longer being met by the battery or that the minimum required electrical current is no longer being supplied by the battery, due to its natural end of life, and the battery should be replaced.

In some devices such as some portable electronic devices for example, the embedded rechargeable battery is a non-removable battery.

Non-removable batteries include batteries that are not readily removable or replaceable by a user, or that call for specialized tools to obtain access to remove or replace the batteries.

US 2010/0134305 describes an intelligent adaptive energy management system and method for an electronic device. It discloses an external battery embodiment in which the electronic device has at least one primary (internal) battery cell and at least one secondary (external) battery that works cooperatively with the primary battery. It also discloses an internal battery embodiment in which at least two batteries are located inside the housing of the electronic device. A control module may control charging, discharging, balancing and/or terminating the use of one or more cells.

US 6 262 560 describes a portable electronic device comprising: a power supply unit comprising an embedded battery, the power supply unit for receiving a replaceable battery operatively connected to the embedded battery to enable charging of the embedded battery from the replaceable battery; a battery monitoring system operatively connected to the power supply unit and configured to monitor battery related information of the embedded battery and to detect a battery deterioration event; and a battery control system operatively connected to the power supply unit and the battery monitoring system, the battery control system for controlling a discharge rate of the embedded battery and a discharge rate of the replaceable battery in response to the battery deterioration event.

### SUMMARY

In an aspect of the present disclosure there is provided a portable electronic device as detailed in claim 1. Advantageous features are provided in the dependent claims..

In another aspect of the present disclosure there is provided a method of managing battery usage of a portable electronic device as detailed in claim 10. Advantageous features are provided in the dependent claims.

### BRIEF DESCRIPTION OF THE DRAWINGS

Fig. 1 is a block diagram depicting an example system for managing battery usage of a portable electronic device.
Fig. 2 is a graph illustrating how the capacity of a rechargeable battery deteriorates at different rates depending on the rate of charge or discharge.
Fig. 3 is a flow diagram depicting an example method of managing battery usage of a portable electronic device.
Fig. 4 is a flow diagram depicting another example method of managing battery usage of a portable electronic device.
Fig. 5 is a block diagram of an example portable electronic device that may include a system for managing battery usage thereof.
Fig. 6 depicts an example in which both the battery monitoring system and the data store are integral to a rechargeable battery of a portable electronic device.

### DETAILED DESCRIPTION

In an aspect of the present disclosure there is provided a portable electronic device comprising: a power supply unit comprising an embedded battery, the power supply unit for receiving a replaceable battery operatively connected to the embedded battery; a battery monitoring system operatively connected to the power supply unit and configured to monitor battery related information of the embedded battery and to detect a battery deterioration event; and a battery control system operatively connected to the power supply unit and the battery monitoring system, the battery control system for controlling a discharge rate of the embedded battery and a discharge rate of the replaceable battery in response to the battery deterioration event.

In another aspect of the present disclosure there is provided a method of managing battery usage of a portable electronic device comprising: monitoring an embedded battery of a portable electronic device; and in response to detection of a battery deterioration event, controlling a discharge rate of the embedded battery and a discharge rate of the replaceable battery.

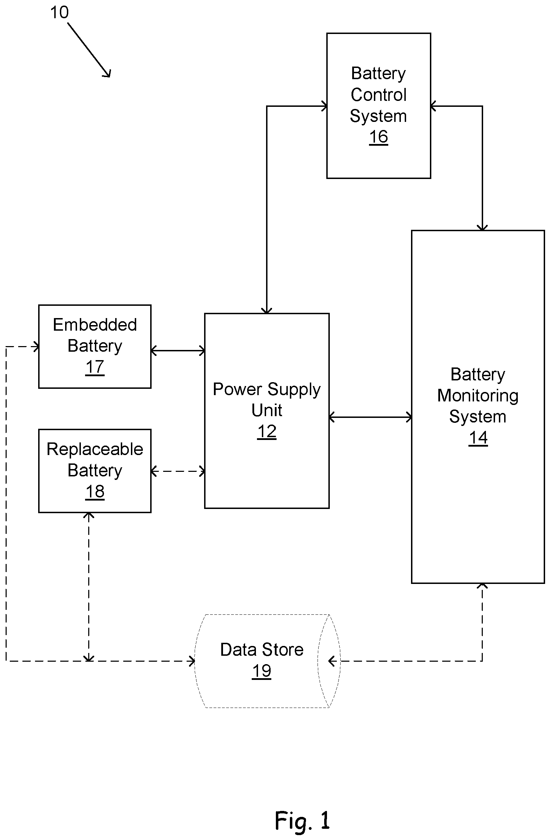

Fig. 1 shows a block diagram of an example system 10 for managing battery usage of a portable electronic device. The portable electronic device may be a portable electronic device such as a cellular phone, a PDA, a tablet or a laptop computer for non limitative examples. It should nevertheless be understood that the system may also be used in other types of systems or devices using a battery.

The system 10 comprises a power supply unit 12, a battery monitoring system 14 and a battery control system 16.

The power supply unit 12 comprises an embedded battery 17 (that is, a battery that is not readily replaceable or is non-replaceable) and may receive a replaceable battery 18 operatively connected to the embedded battery 18. In general, components are operatively connected when the components are directly or indirectly coupled (physically, mechanically or electrically) so that the components can operate together The embedded battery 17 may be removable and may comprise an array of battery cells. The battery cells may be programmable battery cells. In the case the system 10 is used in a portable electronic device (not shown), the embedded battery 17 may be a rechargeable battery. The replaceable battery 18 may be a removable rechargeable battery and may also comprise an array of battery cells.

As it will become apparent below, the system 10 for managing battery usage of a portable electronic device may be particularly useful for extending the lifespan of an embedded battery in a portable electronic device, for example. The portable electronic device, which may also be called a dual battery handset, comprises a replaceable battery 18 in addition to the embedded battery 17. In order to reduce deterioration of the embedded battery 17 and extend the life of the embedded battery 17, the replaceable battery 18 may be sacrificed. In one example, the system 10 may be operated without the replaceable battery. In one example, the system 10 automatically detects the presence of the replaceable battery 18.

Still referring to Fig. 1, the battery monitoring system 14 is operatively connected to the power supply unit 12 and is configured to monitor battery related information of the embedded battery 17 and to detect a battery deterioration event relating to a battery performance characteristic of the embedded battery 17. As described below, the deterioration event may be a battery charging event, a battery discharging event or a storage period.

In one example, the battery monitoring system 14 monitors battery related information including information indicating an age of the embedded battery 17, charging information, discharge information and storage information. The charging information may include a number of charge cycles incurred by the embedded battery 17, a level of charge of the embedded battery 17, an information indicating whether each of the charge cycles were full charge cycles or partial charge cycles, an information indicating a degree to which the embedded battery 17 was charged during the partial charge cycles and information relating to a rate of charge during the charge cycles.

The discharge information may include a number of discharge cycles incurred by the embedded battery and information relating to a rate of discharge during the discharge cycles.

The storage information may include information relating to periods when the embedded battery is not being actively charged or discharged, information relating to temperature during storage periods and information relating to charge level during storage periods.

The battery monitoring system 14 may include one or more processing devices, such as a microprocessor or DSP, and may also include one or more sensor devices for detecting operating parameters of the embedded battery 17. For example, the battery monitoring system 14 may receive information from sensor devices to determine the ambient temperature of the embedded battery 17, the charge or discharge current of the embedded battery 17, the battery voltage, and/or other operating parameters, as it will become apparent below. In one example, the replaceable battery 18 is monitored in a similar manner as the embedded battery 17.

Still referring to Fig. 1, the battery control system 16 is operatively connected to the power supply unit 12 and to the battery monitoring system 14. The battery control system 16 is configured to control a usage of the embedded battery 17 and a usage of the replaceable battery 18 when connected to the embedded battery 17 according to at least one of the battery related information of the embedded battery 17 and the battery deterioration event. The usage of the replaceable battery 18 is further determined according to a replaceable battery sacrificial mode enabled to reduce the amount of deterioration of the performance characteristic of the embedded battery 17. In other words, the replaceable battery 18 may be operated in a specific condition that deteriorates one or more performance characteristic(s) thereof in order to preserve at least one performance characteristic of the embedded battery 17.

For example, the replaceable battery sacrificial mode may be determined to specifically extend a lifecycle of the embedded battery 17. Alternatively or in addition, the replaceable battery sacrificial mode may be further determined to keep a level of charge of the embedded battery 17 above a threshold. In one example, the replaceable battery sacrificial mode enables using the replaceable battery 18 while preventing using the embedded battery 17. This example may be particularly useful during extreme operating conditions, such as extreme temperatures, for example, which may greatly deteriorate the embedded battery 17.

In one example, the replaceable battery sacrificial mode enables charging the embedded battery 17 from the replaceable battery 18. Alternatively or additionally, the replaceable battery sacrificial mode enables sacrificing a discharge rate of the replaceable battery 18 to further reduce the amount of degradation of the performance characteristics of the embedded battery 17.

In another example, the replaceable battery sacrificial mode enables piggybacking charging the embedded battery 17 from the replaceable battery 18. In still another embodiment, the replaceable battery sacrificial mode enables maintaining the embedded battery 17 above a threshold level of charge during a storage period. The threshold level of charge may be selected in order to reduce degradation of the embedded battery 17.

As mentioned above, it may be particularly useful to extend the lifespan of an embedded battery of a portable electronic device. It may also be useful, for example, to reduce dimensions of the embedded battery while still providing a suitable autonomy to the portable electronic device.

In one example, the embedded battery 17 may have a reduced capacity in order to reduce the overall size of the portable electronic device since the replaceable battery 18 may help to reduce deterioration of the maximum available level of charge of the embedded battery 17.

In one example, a data store 19 may be provided for storing the battery related information and data relating to the battery deterioration event. The data store 19 may be any type of non-volatile data storage device, such as a flash memory or other memory device. The data store 19 may communicate with the embedded battery 17, the replaceable battery 18 and the battery monitoring system, for example. In one embodiment, the data store 19 may be physically attached or internal to the embedded battery 17.

In operation, data relating to the deterioration of the embedded battery 17 is monitored by the battery monitoring system 14. Battery deterioration relates to the amount by which one or more battery performance characteristics, such as the rechargeable battery's ability to store and/or deliver a charge, have diminished over time. Battery deterioration may be caused by one or more factors that are monitored by the battery monitoring system 14 to determine the present deterioration of a battery performance characteristic. As illustrated, the battery performance characteristics may include the battery's charge capacity and/or the equivalent series resistance (ESR).

For example, a portable electronic device, such as a cellular telephone, requires a minimum amount of current (mA) from the battery in order to operate. The minimum ESR may therefore represent the ESR value below which the battery in a portable electronic device will not have sufficient inrush current to operate the device.

Both of these battery performance characteristics (capacity and ESR) are subject to deterioration over time. The deterioration of a rechargeable battery over time is caused by the combination of numerous environmental and operational factors. The degree to which these factors cause battery deterioration vary according to battery chemistry. As illustrated in Fig. 1, several of these factors include the age of the battery, the rate at which the battery is charged and/or discharged, the total number of charge and/or discharge cycles incurred by the battery and whether these cycles were full or partial, the battery temperature, and the charge level at which the battery is stored when not in use.

In one example, the battery monitoring system 14 may determine an amount of deterioration of a battery performance characteristic based, at least in part, on the number of charge cycles incurred by the embedded battery 17 and the degree to which each of the charge cycles are full charge cycles or partial charge cycles. In addition, the battery monitoring system 14 may monitor whether the embedded battery 17 is fully or partially charged and include this information in the data store 19. This information may then be used by the battery monitoring system 14 to determine the percent deterioration of a battery performance characteristic, for example, by using a stored deterioration look-up table or algorithm that is specific to the type of the embedded battery 17 (e.g., the battery's chemical composition).

For instance, the battery monitoring system 14 may utilize an algorithm or look-up table that associates a certain percentage of battery deterioration to every charge or discharge cycle incurred by the embedded battery 17. The percentage of battery deterioration associated with a charge or discharge cycle may then be weighted depending on whether the charge or discharge cycle was full or partial. Even further, different weighting factors may be applied to the deterioration calculation depending on the amount the battery is charged or discharged during a cycle. It should be mentioned that the amount of deterioration of the embedded battery 17 that is determined may not be the actual value but a suitable approximation thereof.

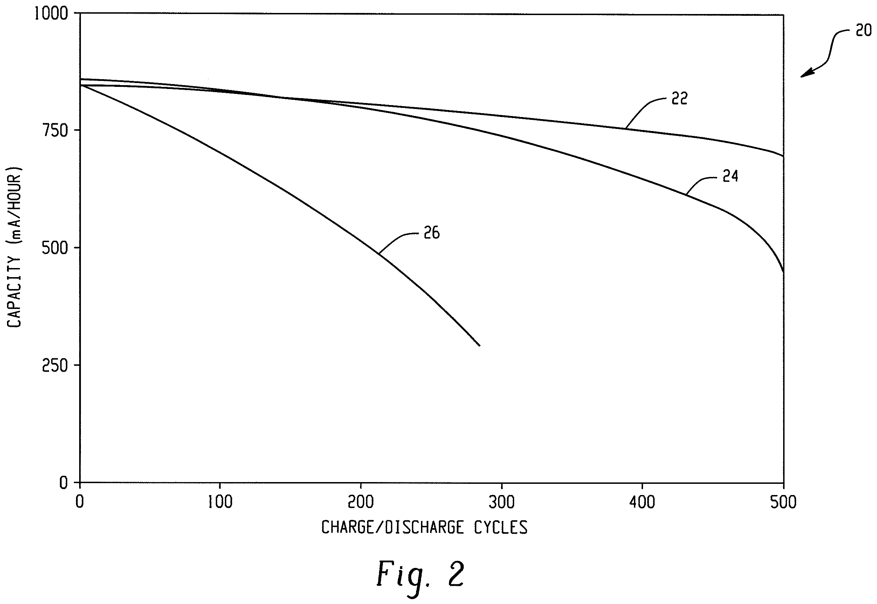

The accuracy of the battery deterioration calculated by the battery monitoring system 14 may be improved by adding further dimensions to the look-up table or algorithm that take into consideration additional environmental or operational factors. For example, Fig. 2 is a graph 20 illustrating how the capacity of a rechargeable battery may deteriorate at different rates depending on the rate of charge or discharge. In the graph 20, the uppermost curve 22 depicts battery capacity deterioration over 500 charge or discharge cycles at a slow charge and discharge rate, and curves 24 and 26 depict battery capacity deterioration at increasingly faster charge/discharge rates (with curve 26 representing the fastest of the three rates). As illustrated, the rate at which the battery deteriorates may be substantially affected by the charge and discharge rates. Accordingly, the rate at which the battery is charged and/or discharged may be included in the information monitored by the battery monitoring system 14 to determine the percent battery deterioration at a given time.

In addition to monitoring operational and environmental factors during charge and discharge cycles, the battery monitoring system 14 may also account for battery deterioration during periods when the battery is not in use. With reference again to Fig. 1, the battery monitoring system 14 may, for example, track the battery age and storage temperature and incorporate these parameters into the overall battery deterioration calculation. A battery 17 will typically deteriorate more quickly when stored at higher temperatures. The age of the battery 17 along with the storage temperature data may thus be used to approximate how much the battery 17 has deteriorated due to storage. This deterioration value may then be combined with the deterioration resulting from charge and discharge cycles to provide a more accurate approximation of battery deterioration. The age of the battery 17 may, for example, be tracked using an internal system clock (not shown) or with reference to external data, such as a wireless network time. The temperature data may be detected and recorded by the battery monitoring system 14, or alternatively may be detected and recorded by a temperature sensing circuit on the embedded battery 17 itself.

In another example, the battery monitoring system 14 may also monitor and record, along with the battery related information, the charge level at which the embedded battery 17 is stored when not being charged or discharged. For example, it is known that a LiIon battery that is stored with a partial charge deteriorates more slowly than a LiIon battery that is stored with a full charge. Therefore, storage charge level information may be used along with the battery age and storage temperature information to determine an even closer approximation of battery deterioration.

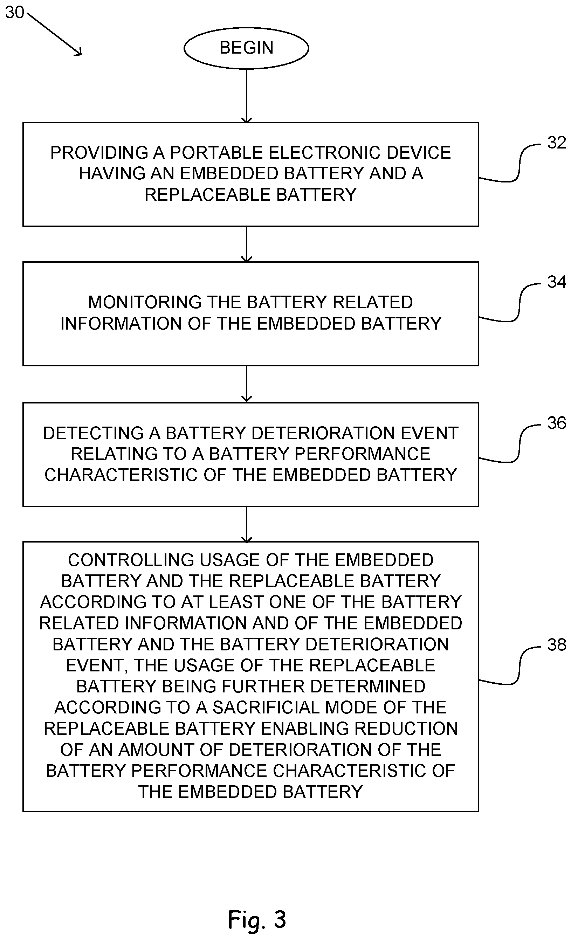

Fig. 3 is a flow diagram depicting an example method 30 of managing battery usage of a battery of a portable electronic device. At step 32, a portable electronic device comprising an embedded battery and for receiving a replaceable battery operatively connected to the embedded battery is provided. In one example, the portable electronic device is a portable electronic device whose embedded battery is an embedded rechargeable battery while the replaceable battery may also be a rechargeable battery.

At step 34, the method 30 monitors battery related information of the embedded battery. The battery related information may include information indicating an age of the embedded battery, charging information, discharge information and storage information, as previously described.

At step 36, the method 30 detects a battery deterioration event relating to a battery performance characteristic of the embedded battery. As previously described, the deterioration event may be a battery charging event, a battery discharging event or a storage period. The battery performance characteristics of the embedded battery 17 that may be taken into consideration include the battery's charge capacity and/or the equivalent series resistance (ESR).

At step 38, the method 30 controls a usage of the embedded battery and a usage of the replaceable battery 17 when the replaceable battery 18 is connected to the embedded battery according to at least one of the battery related information of the embedded battery and the battery deterioration event. The usage of the replaceable battery 18 is further determined according to a replaceable battery sacrificial mode enabling reduction of the amount of deterioration of the battery performance characteristic of the embedded battery 17.

In one example, the method 30 may use a look-up table adapted to the type of the embedded battery to determine an approximation of the present amount of deterioration. In another example, the method 30 may use a detection algorithm, as previously described.

For example, in step 38, the method 30 may access an algorithm or look-up table from a memory or data store for use in determining the amount of deterioration caused by the deterioration event. For instance, the method may select an algorithm or look-up table that is specific to the type of battery (e.g., the battery's chemical composition) and/or the type of deterioration event. In addition, different algorithms or look-up tables may be selected depending on one or more of the detected deterioration factors, such as the age of the battery, the temperature during the deterioration event and/or other factors.

In one example, in order to provide a more accurate approximation of the deterioration of the embedded battery, the method 30 may further monitor at least one of an environmental factor and an operational factor affecting deterioration of the battery performance characteristic from the battery deterioration event. In one example, several environmental and operational factors may be monitored. These environmental and operational factors may include, for example, an average rate at which the rechargeable battery is charged, an average rate at which the rechargeable battery is discharged, an information indicating whether the charging event is a full or partial charge cycle, an information indicating whether the discharging event is a full or partial discharge cycle, an age of the battery and an average temperature and charge level during the storage period.

As previously mentioned, in one example, the method 30 may enable operation of a dual battery handset provided with an embedded battery and a replaceable battery in order to preserve at least one performance characteristic of the embedded battery.

For example, the method 30 may operate the portable electronic device according to a replaceable battery sacrificial mode specifically devised to extend a lifecycle of the embedded battery. Alternatively or in addition, the replaceable battery sacrificial mode may be further determined to keep a level of charge of the embedded battery within a range, below a given level or even above another given level established expressly or inferentially at some time earlier in the battery's lifecycle. In one example, the replaceable battery sacrificial mode may enable using the removable battery while preventing using the embedded battery. This example may be particularly useful during extreme operating or environmental conditions which would greatly deteriorate the embedded battery in order to reduce the impact of these extreme conditions.

In one example, the replaceable battery sacrificial mode may be determined to enable charging the embedded battery from the removable battery. Alternatively or additionally, the replaceable battery sacrificial mode may enable increasing a discharge rate of the removable battery to further reduce the amount of degradation of the performance characteristics of the embedded battery.

In another example, the replaceable battery sacrificial mode enables piggybacking charging the embedded battery from the removable battery. In still another embodiment, the replaceable battery sacrificial mode enables maintaining the embedded battery above a threshold level of charge during a storage period until the replaceable battery is dead.

As mentioned above, it may be particularly useful to extend the lifespan of an embedded battery of a portable electronic device. It may also be useful, for example, to reduce dimensions of the embedded battery while still providing a suitable operating life for the portable electronic device. In one example, the embedded battery may have a reduced capacity in order to reduce the overall size of the portable electronic device since the use of the replaceable battery 18 may help to reduce deterioration of the maximum available level of charge of the embedded battery 17. The method described above may also help reduce costs associated with the embedded battery since the useful capacity of the embedded battery may be reduced.

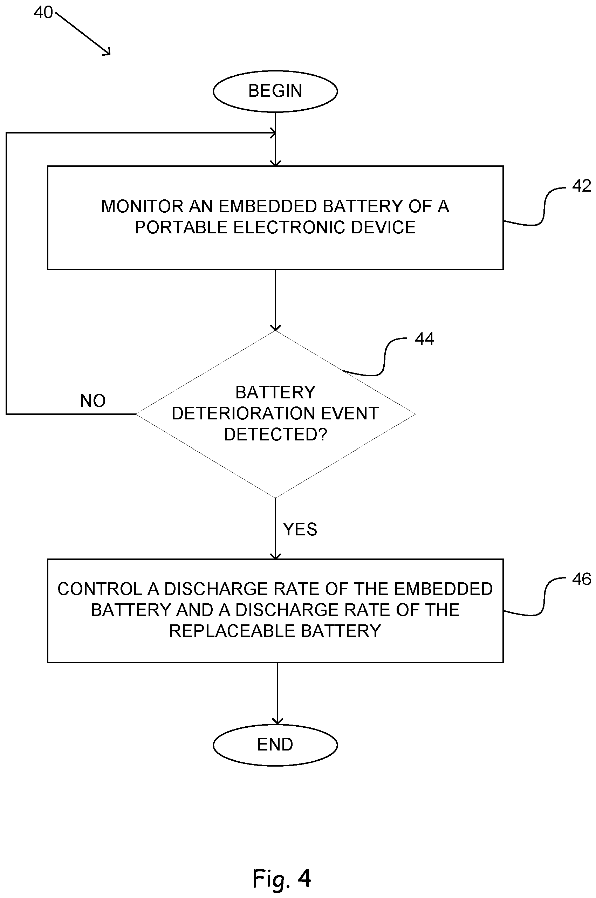

Fig. 4 is a flow diagram depicting another example method 40 managing battery usage of a battery of a portable electronic device. Similar to the method of Fig. 3, the method 40 may extend a lifespan of an embedded battery of a portable electronic device. According to the methods, the lifespan of the embedded battery may be extended because the embedded battery may only be discharged according to an envelope of safe operation.

At step 42, an embedded battery of the portable electronic device is monitored. At step 44, the method determines if a battery deterioration event has been detected. When a battery deterioration event has been detected, a discharge rate of the embedded battery and a discharge rate of the replaceable battery are controlled, at step 46.

The discharge rate of the embedded battery and the discharge rate of the replaceable battery may be controlled based on the battery related information of the embedded battery and/or a sacrificial mode of the replaceable battery. The sacrificial mode may maintain a level of charge of the embedded battery above a threshold. The sacrificial mode may discharge the replaceable battery while maintaining the charge level of the embedded battery. The sacrificial mode may charge the embedded battery from the replaceable battery, which may reduce an average charge rate of the embedded battery.

Further, changes to one or both of the discharge rate of the embedded battery and the discharge rate of the replaceable battery associated with the battery deterioration event may be determined using a look-up table or an algorithm.

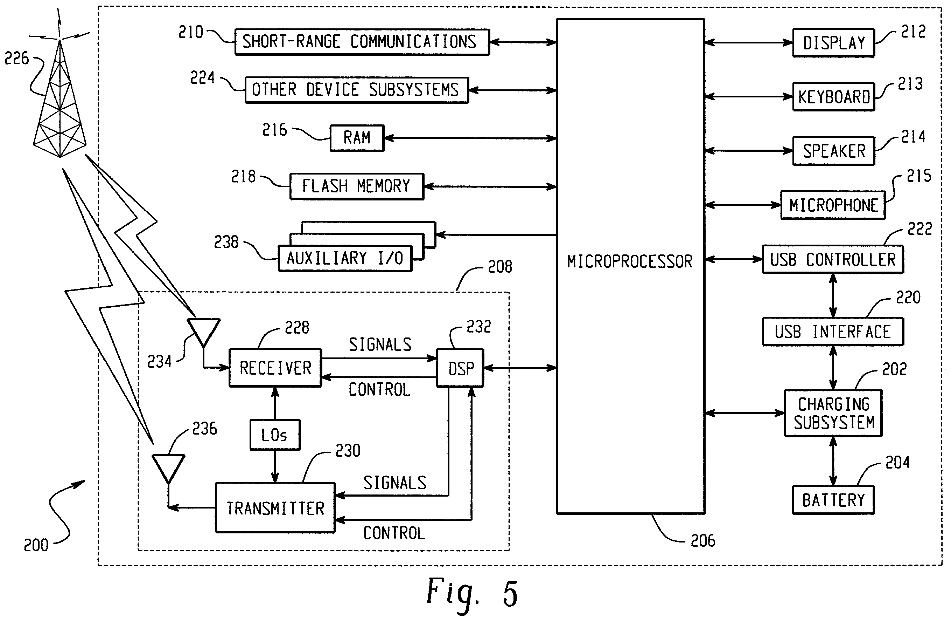

Fig. 5 is a block diagram of an example portable electronic device 200 that may include a system for managing battery usage of the portable electronic device. The portable electronic device 200 includes a charging subsystem 202 and an embedded battery 204. The charging subsystem 202 may be adapted to receive a replaceable additional battery (not shown). The charging subsystem 202 may include a battery monitoring system and a battery control system, as described herein, in order to enable implementation of the present method for managing battery usage. In addition, the embedded battery 204 may include an integrated memory device for storing battery deterioration information and/or other information pertaining to the embedded battery 204. The portable electronic device 200 may also include a processing device 206, a communications subsystem 208, a short-range communications subsystem 210, input/output devices 212-215, memory devices 216, 218, a USB interface 220 and USB controller 22, and various other device subsystems 224.

In addition to monitoring battery deterioration, the charging subsystem 202 charges the rechargeable embedded battery 204 and provides power to the portable electronic device 200, either from the rechargeable embedded battery 204 or from a USB host connected to the USB interface 220. The USB controller 222 monitors the USB data lines, and controls data communication between the processing device 206 and a USB host.

The processing device 206 controls the overall operation of the portable electronic device 200. Operating system software executed by the processing device 206 is preferably stored in a persistent store such as a flash memory 218, but may also be stored in other types of memory devices, such as a read only memory (ROM) or similar storage element. In addition, operating system software, specific device applications, or parts thereof, may be temporarily loaded into a volatile store, such as a random access memory (RAM) 216. Communication signals received by the portable electronic device 200 may also be stored to RAM 216.

The processing device 206, in addition to its operating system functions, enables execution of software applications on the device 200. A set of applications that control basic device operations, such as data and voice communications, may be installed on the device 200 during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via the wireless network 226. Preferably, the PIM data items are seamlessly integrated, synchronized and updated via the wireless network 226 with the device user's corresponding data items stored or associated with a host computer system.

Communication functions, including data and voice communications, are performed through the communication subsystem 208, and possibly through the short-range communications subsystem 210. If the portable electronic device 200 is enabled for two-way communications, then the communication subsystem 200 includes a receiver 228, a transmitter 230, and a processing module 232, such as a digital signal processor (DSP). In addition, the communication subsystem 208, configured as a two-way communications device, includes one or more, preferably embedded or internal, antenna elements 234, 236, and local oscillators (LOs) 238. The specific design and implementation of the communication subsystem 208 is dependent upon the communication network 226 in which the portable electronic device 200 is intended to operate. Network access requirements vary depending upon the type of communication system 226.

When required network registration or activation procedures have been completed, the portable electronic device 200 may send and receive communication signals over the communication network 226. Signals received by the antenna 234 through the communication network 226 are input to the receiver 228, which may perform such common receiver functions as signal amplification, frequency down-conversion, filtering, channel selection, and analog-to-digital conversion. Analog-to-digital conversion of the received signal allows the DSP to perform more complex communication functions, such as demodulation and decoding. In a similar manner, signals to be transmitted are processed by the DSP 232, and are then input to the transmitter 230 for digital-to-analog conversion, frequency up-conversion, filtering, amplification and transmission over the communication network 208 via the antenna 236.

In addition to processing communication signals, the DSP 232 provides for receiver 228 and transmitter 230 control. For example, gains applied to communication signals in the receiver 228 and transmitter 230 may be adaptively controlled through automatic gain control algorithms implemented in the DSP 232.

In a data communication mode, a received signal, such as a text message or web page download, is processed by the communication subsystem 208 and input to the processing device 206. The received signal is then further processed by the processing device 206 for output to a display 212, or alternatively to some other auxiliary I/O device 238. A device user may also compose data items, such as e-mail messages, using a keyboard 213, and/or some other auxiliary I/O device 238, such as a touchpad, a rocker switch, a thumb-wheel, or some other type of input device. The composed data items may then be transmitted over the communication network 226 via the communication subsystem 208.

In a voice communication mode, overall operation of the device 200 is substantially similar to data communication mode, except that received signals are output to a speaker 214, and signals for transmission are generated by a microphone 215. Alternative voice or audio I/O subsystems, such as a voice message recording subsystem, may also be implemented on the device 200. In addition, the display 212 may also be utilized in voice communication mode, for example to display the identity of a calling party, the duration of a voice call, or other voice call related information.

The short-range communications subsystem 210 enables communication between the portable electronic device 200 and other proximate systems or devices, which need not necessarily be similar devices. For example, the short-range communications subsystem 210 may include an infrared device and associated circuits and components, or a Bluetooth™ communication module to provide for communication with similarly-enabled systems and devices.

The methods described herein may be carried out by hardware, software, or a combination of hardware and software. The software may be embodied as computer-readable code executable by, for example, at least one processor 206 of the portable electronic device 200. The computer-readable medium, may be a non-transitory computer-readable medium, for example. Coding of software for carrying out such steps is well within the scope of a person of ordinary skill in the art given the present description.

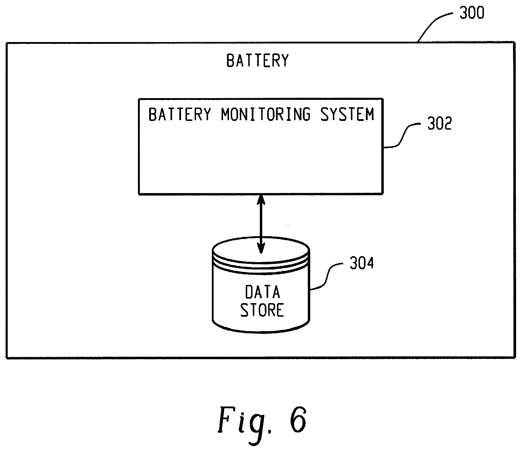

This disclosure uses examples to disclose the claimed subject-matter. The scope of the claimed subject-matter may include other examples that occur to those skilled in the art. For example, Fig. 6 depicts an example in which both the battery monitoring system 302 and the data store 304 are integral to the embedded battery 300. With an integral battery monitoring system 302, information relating to the storage and possibly charging of the battery 300 may be monitored and recorded even when the battery 300 has not been inserted into a portable electronic device. When the embedded battery 300 is inserted into a portable electronic device, the integral battery monitoring system 302 may communicate with systems within the portable electronic device to monitor charging, discharging and storage information and to cause information relating to battery deterioration to be displayed on the portable electronic device, as described above.

Implementation of one or more embodiments may realize one or more advantages, some of which have been indicated already. The concepts described herein may be flexibly applied to a variety of electronic devices, including devices having a variety of power systems. Many of the hardware components may be small and lightweight, which may be especially advantageous for handheld devices, in which considerations of size and weight are important. The concepts described herein may reduce the adverse impact of battery degradation and may improve the life of the embedded battery. In devices in which a replaceable battery is sacrificed, convenience to a user may be enhanced, because a replaceable battery may be readily replaceable while an embedded battery is not.

Further, battery degradation associated with extreme operating conditions may be avoided by using the replaceable battery instead of the embedded battery.

## Claims

1. A portable electronic device (200) comprising:
a power supply unit (12) comprising an embedded battery (17), the power supply unit (12) for receiving a replaceable battery (18) operatively connected to the embedded battery (17) either: to enable charging of the embedded battery from the replaceable battery; or to power the portable electronic device (200) using the replaceable battery (18) while the charge level of the embedded battery (17) is maintained;
a battery monitoring system (14) operatively connected to the power supply unit (12) and configured to monitor battery related information of the embedded battery (17) and the replaceable battery (18) and to detect a battery deterioration event; and
a battery control system (16) operatively connected to the power supply unit (12) and the battery monitoring system (14), the battery control system (16) for controlling a discharge rate of the embedded battery (17) and a discharge rate of the replaceable battery (18) in response to the battery deterioration event.

2. A portable electronic device (200) as claimed in claim 1, wherein the discharge rate of the embedded battery (17) and the discharge rate of the replaceable battery (18) are controlled based on one of battery related information of the embedded battery (17) and a sacrificial mode of the replaceable battery (18).

3. The portable electronic device (200) as claimed in claim 1, wherein the embedded battery (17) is an embedded rechargeable battery and the replaceable battery (18) is a removable rechargeable battery.

4. The portable electronic device (200) as claimed in claim 1, wherein the embedded battery (17) is non-removable.

5. The portable electronic device (200) as claimed in claim 1, wherein the battery related information comprises charging information, discharge information and storage information.

6. The portable electronic device (200) as claimed in claim 1, wherein the deterioration event is one of: a battery charging event, a battery discharging event and a storage period.

7. The portable electronic device (200) as claimed in claim 1, wherein the battery deterioration event is related to one of a battery capacity and an equivalent series resistance (ESR).

8. The portable electronic device (200) as claimed in claim 1, wherein changes to one or both of the discharge rate of the embedded battery (17) and the discharge rate of the replaceable battery (18) associated with the battery deterioration event are determined using one of a look-up table and an algorithm.

9. The portable electronic device (200) as claimed in claim 2, wherein the sacrificial mode comprises maintaining a level of charge of the embedded battery (17) within a predetermined range.

10. A method of managing battery usage of a portable electronic device (200) comprising:
monitoring an embedded battery (17) of a portable electronic device (200);
monitoring a replaceable battery (18) of the portable electronic device (200); the replaceable battery (18) operatively connected to the embedded battery (17) either: to enable charging of the embedded battery from the replaceable battery; or to power the portable electronic device (200) while a level of charge of the embedded battery (17) is maintained; and
in response to detection of a battery deterioration event, controlling a discharge rate of the embedded battery (17) and a discharge rate of the replaceable battery (18).

11. A method as claimed in claim 10, wherein the discharge rate of the embedded battery (17) and the discharge rate of the replaceable battery (18) are controlled based on one of battery related information of the embedded battery (17) and a sacrificial mode of the replaceable battery (18).

12. A method as claimed in claim 10, wherein the battery related information comprises charging information, discharge information and storage information.

13. A method as claimed in claim 10, wherein the deterioration event is one of: a battery charging event, a battery discharging event and a storage period.

14. A method as claimed in claim 10, wherein changes to one or both of the discharge rate of the embedded battery (17) and the discharge rate of the replaceable battery (18) associated with the battery deterioration event are determined using one of a look-up table and an algorithm.

15. A method as claimed in claim 11, wherein the sacrificial mode comprises maintaining a level of charge of the embedded battery (17) in a predetermined range.

## Patentansprüche

1. Tragbare Elektronikvorrichtung (200) mit:
einer Leistungsversorgungseinheit (12), die eine eingebettete Batterie (17) aufweist, wobei die Leistungsversorgungseinheit (12) dem Aufnehmen einer austauschbaren Batterie (18) dient, die in Betrieb mit der eingebetteten Batterie (17) entweder dazu verbunden ist, um ein Laden der eingebetteten Batterie von der austauschbaren Batterie zu ermöglichen, oder dazu, um die tragbare Elektronikvorrichtung (200) unter Verwendung der austauschbaren Batterie (18) mit Leistung zu versorgen, während der Ladungspegel der eingebetteten Batterie (17) aufrechterhalten wird,
einem Batterieüberwachungssystem (14), das in Betrieb mit der Leistungsversorgungseinheit (12) verbunden ist und das dazu konfiguriert ist, batteriebezogene Information der eingebetteten Batterie (17) und der austauschbaren Batterie (18) zu überwachen und ein Batterieverschlechterungsereignis zu erfassen, und
einem Batteriesteuerungssystem (16), das in Betrieb mit der Leistungsversorgungseinheit (12) und dem Batterieüberwachungssystem (14) verknüpft ist, wobei das Batteriesteuerungssystem (16) dem Steuern einer Entladungsrate der eingebetteten Batterie (17) und der Entladungsrate der austauschbaren Batterie (18) als Reaktion auf das Batterieverschlechterungsereignis dient.

2. Tragbare Elektronikvorrichtung (200) nach Anspruch 1, wobei die Entladungsrate der eingebetteten Batterie (17) und die Entladungsrate der austauschbaren Batterie (18) auf der Grundlage eines aus der batteriebezogenen Information der eingebetteten Batterie (17) und einem Opfermodus der austauschbaren Batterie (18) gesteuert wird.

3. Tragbare Elektronikvorrichtung (200) nach Anspruch 1, wobei die eingebettete Batterie (17) eine eingebettete wiederaufladbare Batterie ist und die austauschbare Batterie (18) eine entfernbare wiederaufladbare Batterie ist.

4. Tragbare Elektronikvorrichtung (200) nach Anspruch 1, wobei die eingebettete Batterie (17) nicht entfernbar ist.

5. Tragbare Elektronikvorrichtung (200) nach Anspruch 1, wobei die batteriebezogene Information Ladungsinformation, Entladungsinformation und Speicherinformation aufweist.

6. Tragbare Elektronikvorrichtung (200) nach Anspruch 1, wobei das Verschlechterungsereignis eines aus einem Batterieladungsereignis, einem Batterieentladungsereignis und einer Speicherdauer ist.

7. Tragbare Elektronikvorrichtung (200) nach Anspruch 1, wobei sich das Batterieentladungsereignis auf eines aus einer Batteriekapazität und einem äquivalenten Reihenwiderstand, "Equivalent Series Resistnace", (ESR) bezieht.

8. Tragbare Elektronikvorrichtung (200) nach Anspruch 1, wobei Änderungen an einem oder beidem aus der Entladungsrate der eingebetteten Batterie (17) und der Entladungsrate der austauschbaren Batterie (18), die mit dem Batterieverschlechterungsereignis verknüpft sind, unter Verwendung einer Nachschlagetabelle und eines Algorithmus bestimmt werden

9. Tragbare Elektronikvorrichtung (200) nach Anspruch 2, wobei der Opfermodus ein Aufrechterhalten eines Ladungspegels der eingebetteten Batterie (17) in einem vorbestimmten Bereich aufweist.

10. Verfahren zum Verwalten einer Batterienutzung einer tragbaren Elektronikvorrichtung (200) mit:
Überwachen einer eingebetteten Batterie (17) einer tragbaren Elektronikvorrichtung (200),
Überwachen einer austauschbaren Batterie (18) der tragbaren Elektronikvorrichtung (200), wobei die austauschbare Batterie (18) in Betrieb mit der eingebetteten Batterie (17) entweder dazu verbunden ist, um ein Laden der eingebetteten Batterie von der austauschbaren Batterie zu ermöglichen, oder dazu, um die tragbare Elektronikvorrichtung (200) mit Leistung zu versorgen, während ein Ladungspegel der eingebetteten Batterie (17) aufrechterhalten wird, und
Steuern einer Entladungsrate der eingebetteten Batterie (17) und einer Entladungsrate der austauschbaren Batterie (18) als Reaktion auf das Erfassen eines Batterieverschlechterungsereignisses.

11. Verfahren nach Anspruch 10, wobei die Entladungsrate der eingebetteten Batterie (17) und die Entladungsrate der austauschbaren Batterie (18) auf der Grundlage eines aus einer batteriebezogenen Information der eingebetteten Batterie (17) und einem Opfermodus der austauschbaren Batterie (18) gesteuert wird.

12. Verfahren nach Anspruch 10, wobei die batteriebezogene Information Ladungsinformation, Entladungsinformation und Speicherinformation aufweist.

13. Verfahren nach Anspruch 10, wobei das Verschlechterungsereignis eines aus einem Batterieladungsereignis, einem Batterieentladungsereignis und einer Speicherdauer ist.

14. Verfahren nach Anspruch 10, wobei Änderungen an einem oder beidem aus der Entladungsrate der eingebetteten Batterie (17) und der Entladungsrate der austauschbaren Batterie (18), die mit dem Batterieverschlechterungsereignis verknüpft sind, unter Verwendung einer Nachschlagetabelle und eines Algorithmus bestimmt werden.

15. Verfahren nach Anspruch 11, wobei der Opfermodus ein Aufrechterhalten eines Ladungspegels der eingebetteten Batterie (17) in einem vorbestimmten Bereich aufweist.

## Revendications

1. Dispositif électronique portable (200) comprenant :
une unité d'alimentation (12) comprenant une batterie intégrée (17), l'unité d'alimentation (12) servant à recevoir une batterie remplaçable (18) connectée fonctionnellement à la batterie intégrée (17) : soit pour permettre la charge de la batterie intégrée à partir de la batterie remplaçable ; soit pour alimenter le dispositif électronique portable (200) en utilisant la batterie remplaçable (18) tandis que le niveau de charge de la batterie intégrée (17) est maintenu ;
un système de surveillance de batterie (14) connecté fonctionnellement à l'unité d'alimentation (12) et configuré pour surveiller les informations relatives à la batterie de la batterie intégrée (17) et de la batterie remplaçable (18) et pour détecter un événement de détérioration de batterie ; et
un système de commande de batterie (16) connecté fonctionnellement à l'unité d'alimentation (12) et au système de surveillance de batterie (14), le système de commande de batterie (16) servant à commander une vitesse de décharge de la batterie intégrée (17) et une vitesse de décharge de la batterie remplaçable (18) en réponse à l'événement de détérioration de batterie.

2. Dispositif électronique portable (200) selon la revendication 1, dans lequel la vitesse de décharge de la batterie intégrée (17) et la vitesse de décharge de la batterie remplaçable (18) sont commandées sur la base de l'un des informations relatives à la batterie de la batterie intégrée (17) et d'un mode sacrificiel de la batterie remplaçable (18).

3. Dispositif électronique portable (200) selon la revendication 1, dans lequel la batterie intégrée (17) est une batterie rechargeable intégrée et la batterie remplaçable (18) est une batterie rechargeable amovible.

4. Dispositif électronique portable (200) selon la revendication 1, dans lequel la batterie intégrée (17) n'est pas amovible.

5. Dispositif électronique portable (200) selon la revendication 1, dans lequel les informations relatives à la batterie comprennent des informations de charge, des informations de décharge et des informations de stockage.

6. Dispositif électronique portable (200) selon la revendication 1, dans lequel l'événement de détérioration est l'un : d'un événement de charge de batterie, d'un événement de décharge de batterie et d'une période de stockage.

7. Dispositif électronique portable (200) selon la revendication 1, dans lequel l'événement de détérioration de batterie concerne l'une d'une capacité de batterie et d'une résistance série équivalente (ESR).

8. Dispositif électronique portable (200) selon la revendication 1, dans lequel les changements de l'une ou des deux de la vitesse de décharge de la batterie intégrée (17) et de la vitesse de décharge de la batterie remplaçable (18) associés à l'événement de détérioration de batterie sont déterminés en utilisant l'un d'une table de correspondance et d'un algorithme.

9. Dispositif électronique portable (200) selon la revendication 2, dans lequel le mode sacrificiel comprend le maintien d'un niveau de charge de la batterie intégrée (17) dans une plage prédéterminée.

10. Procédé de gestion de l'utilisation des batteries d'un dispositif électronique portable (200) comprenant :
la surveillance d'une batterie intégrée (17) d'un dispositif électronique portable (200) ;
la surveillance d'une batterie remplaçable (18) du dispositif électronique portable (200) ; la batterie remplaçable (18) étant connectée fonctionnellement à la batterie intégrée (17) : soit pour permettre la charge de la batterie intégrée à partir de la batterie remplaçable ; soit pour alimenter le dispositif électronique portable (200) tandis qu'un niveau de charge de la batterie intégrée (17) est maintenu ; et
en réponse à la détection d'un événement de détérioration de batterie, la commande d'une vitesse de décharge de la batterie intégrée (17) et d'une vitesse de décharge de la batterie remplaçable (18).

11. Procédé selon la revendication 10, dans lequel la vitesse de décharge de la batterie intégrée (17) et la vitesse de décharge de la batterie remplaçable (18) sont commandées sur la base de l'un des informations relatives à la batterie de la batterie intégrée (17) et d'un mode sacrificiel de la batterie remplaçable (18).

12. Procédé selon la revendication 10, dans lequel les informations relatives à la batterie comprennent des informations de charge, des informations de décharge et des informations de stockage.

13. Procédé selon la revendication 10, dans lequel l'événement de détérioration est l'un : d'un événement de charge de batterie, d'un événement de décharge de batterie et d'une période de stockage.

14. Procédé selon la revendication 10, dans lequel les changements de l'une ou des deux de la vitesse de décharge de la batterie intégrée (17) et de la vitesse de décharge de la batterie remplaçable (18) associés à l'événement de détérioration de batterie sont déterminés en utilisant l'un d'une table de correspondance et d'un algorithme.

15. Procédé selon la revendication 11, dans lequel le mode sacrificiel comprend le maintien d'un niveau de charge de la batterie intégrée (17) dans une plage prédéterminée.
